(19)

Europäisches
Patentamt
European
Patent Office
Office européen
des brevets

(11) **EP 1 834 986 A1**

(12) **EUROPEAN PATENT APPLICATION**

(43) Date of publication:
**19.09.2007 Bulletin 2007/38**

(51) Int Cl.:
*C08L 23/04* (2006.01)          *B32B 27/32* (2006.01)
*C08J 5/18* (2006.01)

(21) Application number: **06251311.4**

(22) Date of filing: **13.03.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Borealis Technology Oy**
**06101 Porvoo (FI)**

(72) Inventors:
• **Nilsen, Jorunn**
  **3930 Porsgrunn (NO)**

• **Helland, Irene**
  **3912 Porsgrunn (NO)**
• **Fell, Hans-jorg**
  **3960 Stathelle (NO)**

(74) Representative: **Campbell, Neil Boyd**
**Frank B. Dehn & Co.**
**St Bride's House**
**10 Salisbury Square**
**London EC4Y 8JD (GB)**

(54) **High density polyethylene**

(57)     A multimodal high density polyethylene composition suitable for the production of film, said composition comprising a HDPE polymer which comprises a lower molecular weight polyethylene component and a higher molecular weight polyethylene component and wherein said HDPE polymer has a SHI (2.7/210) of 13 or more and,

when said multimodal HDPE composition is formed as a blown film consisting of said HDPE polymer and having a thickness of 30 $\mu$m,
said film has a WVTR of less than 4.5 g/m$^2$/24 hours according to ASTM F 1249 at 38°C and 90% humidity.

EP 1 834 986 A1

**Description**

This invention relates to a multimodal high density polyethylene (HDPE) composition which exhibits excellent barrier properties as well as remarkable mechanical properties together with excellent processability, and to processes for the manufacture thereof. The invention also concerns films comprising at least one layer formed from such a multimodal HDPE composition.

HDPE is widely used in the manufacture of films for a range of applications (e.g. shrink film, shopping bags etc). HDPE films are also commonly used in food packaging, e.g. in the packaging of cereals. Films used in food packaging require barrier properties (i.e. they should be impervious to moisture) in order to prevent or minimise degradation of the packaged product thereby enhancing its shelf life. This is conventionally achieved by laminating an HDPE film layer onto a separate barrier layer. Typical barrier layers are made of aluminium or polyethylene terephthalate.

A further requirement of HDPE film used in packaging is that it should be strong. This ensures that the film is not easily damaged (e.g. during transportation or handling) and that it will retain its form once the package is opened. It is particularly important that films used in packaging do not have a tendency to tear. A recognised problem with many films, and especially films used in food packaging, is that it is very easy to accidentally introduce a tear when opening the packaging. Such tears have an undesirable tendency to elongate which can cause the contents of the packaging to spill.

In dry food packaging, for example, films need to possess a good moisture barrier. At the same time, it is desirable that the mechanical properties of the film are excellent and that the production of the film is cost efficient and environmentally friendly. Thus, there should be an optimal balance of low water vapour transmission rate (abbreviated herein as WVTR) and good tear resistance whilst the film thickness is kept as low as possible.

It is known that acceptable WVTR properties and mechanical properties can be obtained for certain polymers which have a narrow molecular weight distribution in terms of the ratio of weight average molecular weight and number average molecular weight, Mw/Mn, (abbreviated herein as MWD), and also in terms of rheological behaviour expressed, for example, as shear thinning index (abbreviated herein as SHI(2.7/210)). However, this typically influences the processability in the film line, and limits output. It will also have an influence on the surface properties of the film formed. Moreover, narrow MWD gives a higher coefficient of friction (COF) which may cause problems with packaging machinery. Friction issues can be avoided by addition of a slip agent.

It has been shown that the inclusion of 5-10 % by weight of low density polyethylene (LDPE) in HDPE films improves tear resistance and it is thought that this may be due to the LDPE providing branches which prevent tear propagation. WO96/18678 teaches that films comprising high molecular weight HDPE combined with small amounts of metallocene-catalysed LLDPE (linear low density polyethylene) have improved tear resistance. WO96/18678 also discloses that styrene-butadiene-styrene, styrene-isopropyl-styrene, ethylene-propylene rubber, ethylene-propylene-diene monomer rubber and butyl rubber can be used instead of LLDPE to serve the same purpose.

Others have approached the problem of tearing not by adding adjuncts to the HDPE, but rather by modifying how it is processed. It has been suggested, for example, that HDPE may be coextruded adjacent to a highly branched polymer to minimise tearing. Film strength and tear resistance is also said to be improved by using a high stalk configuration and maximum blow-up ratio.

These previous approaches are not, however, without disadvantages. Blending HDPE with LDPE is difficult due to their inherent differences in viscosity and hence the films which result tend to be inhomogeneous. Additionally, introducing modifications during the processing of film (e.g. inclusion of a layer comprising highly branched polymer) tends to be expensive.

Hence there is still a need for alternative HDPE films with a good balance between WVTR, mechanical and processing properties.

The present inventors have surprisingly found that a multimodal high density polyethylene (HDPE) composition which has a broad molecular weight distribution can be used for preparing films exhibiting unexpectedly good water vapour barrier properties.

Accordingly, the invention provides a multimodal HDPE composition comprising at least a HDPE polymer which comprises a lower molecular weight (LMW) polyethylene component and a higher molecular weight (HMW) polyethylene component suitable for preparing mono- or multilayer films.

Mono- or multilayer films produced using the multimodal HDPE composition of the invention have good balance between barrier properties expressed as WVTR, together with very good processability expressed, for example, as SHI. Preferably the polyethylene composition also provides a film with very good mechanical properties expressed as tear resistance values in machine direction, MD (Elmendorf).

Surprisingly, the multimodal HDPE composition with a broad molecular weight distribution is easy to process into a mono- or multilayer film.

Thus viewed from one aspect, the invention provides a multimodal high density polyethylene composition suitable for the production of film, said composition comprising a HDPE polymer which contains a lower molecular weight polyethylene component and a higher molecular weight polyethylene component, wherein said HDPE polymer has a SHI (2.7/210) of 13 or more and,

when said composition is formed as a blown film consisting of said HDPE polymer and having a thickness of 30 $\mu$m, said film has a WVTR of less than 4.5 g/m$^2$/24 hours according to ASTM F 1249 at 38°C and 90% humidity.

Viewed from another aspect, the invention provides a multimodal high density polyethylene composition suitable for the production of film, said composition comprising a HDPE polymer having a lower molecular weight polyethylene component and a higher molecular weight polyethylene component, wherein said HDPE polymer has a Mw/Mn of at least 10 and,

when said composition is formed as a blown film consisting of said HDPE polymer and having a thickness of 30 $\mu$m, said film has a WVTR of less than 5.0 g/m$^2$/24 hours according to ASTM F 1249 at 38°C and 90% humidity.

Viewed from a further aspect, the invention provides a multimodal high density polyethylene composition suitable for the production of film, said composition comprising a HDPE polymer which comprises a lower molecular weight polyethylene component and a higher molecular weight polyethylene component and wherein said polymer has a SHI (2.7/210) of 13 or more and a Mw/Mn of at least 10,

when said composition is formed as a blown film consisting of said HDPE polymer and having a thickness of 30 $\mu$m, said film has a WVTR of less than 5.0 g/m$^2$/24 hours according to ASTM F 1249 at 38°C and 90% humidity.

Viewed from another aspect the invention provides a film comprising at least one layer comprising a composition as hereinbefore described. In one embodiment the at least one layer of the film of the invention consists of the HDPE composition as hereinbefore or hereinafter described.

Viewed from another aspect the invention provides a process for the preparation of a film as hereinbefore or hereinafter described comprising extruding a multimodal HDPE composition of the invention as hereinbefore defined.

The phrase "when said composition is formulated as a blown film consisting of said HDPE polymer and having a thickness of 30 microns" is not intended to be limiting on the thickness of any film and is simply included so that a quantitative measure of WVTR can be specified. In other words, films comprising HDPE's of the invention but having one or more layers, other components and/or having a thickness of other than 30 $\mu$m are included in the scope of the invention. What is required is that when the HDPE polymer of the HDPE composition is used alone (i.e. as the only polymer component) to form a film of 30 $\mu$m thickness, the specified WVTR value is satisfied.

Films of 30 $\mu$m in thickness for use in assessing the WVTR and any other parameter for which a value based on film thickness is given are made according to the protocol set forth in example 2.

Usually, a HDPE polymer comprising at least two polyethylene fractions, which have been produced under different polymerisation conditions resulting in different (weight average) molecular weights and molecular weight distributions for the fractions, is referred to as "multimodal". Accordingly, the polymers of the composition of the invention are multimodal polyethylenes. The prefix "multi" relates to the number of different polymer fractions present in the polymer. Thus, for example, a polymer consisting of two fractions only is called "bimodal". The form of the molecular weight distribution curve, i.e. the appearance of the graph of the polymer weight fraction as function of its molecular weight, of a multimodal polyethylene will show two or more maxima or at least be distinctly broadened in comparison with the curves for the individual fractions. For example, if a polymer is produced in a sequential multistage process, utilising reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions are superimposed into the molecular weight distribution curve for the total resulting polymer product, usually yielding a curve with two or more distinct maxima.

In any multimodal polymer there is by definition a lower molecular weight component (LMW) and a higher molecular weight component (HMW). Preferably, in the HDPE polymer of the invention at least one of the LMW and HMW fractions is a copolymer of ethylene. Further preferably, one of LMW and HMW is an ethylene homopolymer. Ideally, the lower molecular weight (LMW) component may be an ethylene copolymer or homopolymer, more preferably a homopolymer. The higher molecular weight (HMW) component is preferably an ethylene copolymer.

The term "ethylene copolymer" as used herein is intended to encompass polymers comprising repeat units deriving from ethylene and at least one other monomer. In typical copolymers at least 0.25 mol-%, preferably at least 0.5 mol-%, e.g. at least 1-mol%, such as up to 10 mol-% of repeat units derive from the comonomer. Ethylene forms the majority of the copolymer. In contrast the term "ethylene homopolymer" as used herein is intended to encompass polymers which consist essentially of repeat units deriving from ethylene. Homopolymers may, for example, comprise at least 99.8 %, preferably at least 99.9 %, by weight of repeat units deriving from ethylene.

The HDPE composition of the invention may contain additives such as pigments, nucleating agents, antioxidants, UV stabilizers, polymer processing aids, antistatic agents and fillers. The amount of the additives is e.g. as conventionally used in the prior art, such as up to 2 % by weight.

As used herein the term "HDPE polymer" is intended to cover polyethylene having a density of at least 940 kg/m$^3$, e.g. at least 945 kg/m$^3$, preferably in the range of from 950 to 980 kg/m$^3$, e.g. 950 to 965 kg/m$^3$ . Especially

preferably, the density of the high density polyethylene polymer of the invention should be at least 955 kg/m$^3$.

The broad molecular weight distribution of the HDPE polymer for use in the invention can be expressed using the rheological behaviour which can be described with a certain level of SHI(2.7/210). The SHI also indicates the good processability of the HDPE.

The HDPE polymer of the HDPE composition should have an SHI(2.7/210) of 13 or more, preferably 14 or more, more preferably 15 or more. The upper limit thereof is not limited, but may be less than 40. Depending on the end application the ranges for SHI (2.7/210) may in certain embodiments be 13 to 30, e.g. 14 to 25, preferably 15 to 23.

The broad molecular weight distribution of the HDPE polymer of the invention can also be expressed using its Mw/Mn. Thus the Mw/Mn of the HDPE polymer of the HDPE composition may be 10 or more, such as 10 to 30, preferably 12 or more, e.g. 12 to 20. In some applications, Mw/Mn of 15 or more may be desired.

The other properties of the multimodal HDPE polymer of the invention are not critical and can be varied and tailored depending on the desired end application.

Accordingly, the HDPE polymer of the HDPE composition preferably has a MFR$_2$ of 0.4 g/10 min or more, e.g. 0.5 g/10min or more, suitably 0.6 to 100 g/10 min, preferably 0.8 to 6 g/10 min, e.g. about 1 to 3 g/10 min as measured according to ISO 1133 at 190°C and under 2.16 kg load.

The weight average molecular weight of preferred HDPE polymers of the HDPE composition is in the range 80,000 to 500,000, more preferably 100,000 to 250,000, still more preferably 120,000 to 180,000. Its Mn should be in the range 5000 to 30,000, preferably 8000, to 15,000.

The HDPE polymer of the HDPE composition preferably has a crystalline melting point between 120 to 150°C (as determined by DSC analysis).

The crystallinity of the HDPE polymer is preferably 60 to 90 % as determined by DSC analysis.

A further measure of the broadness of the molecular weight distribution is the polydispersity index (PI). For the high density polyethylene polymer of the composition of the invention, PI is preferably 0.5 to 3, especially 1 to 2. The rheological behaviour of polymers is a further indicator of the mechanical properties and the processability of the polymer.

Eta 0.05 values of the HDPE polymer of the composition may be less than 13,000, preferably less than 11,000. The lower limit may preferably be e.g. 6000, however can also be lower.

The HDPE polymer of the composition of the invention may possess G' values at 5kPa of higher than 1750 and typically less than 2500. G' value indicates the elasticity behaviour of the polymer.

The LMW component of the HDPE polymer preferably has a density of more than 950 kg/cm$^3$, preferably 950 to 980 kg/cm$^3$, preferably 960 to 975 kg/m$^3$. The LMW component preferably has a MFR$_2$ of 20 to 1000 g/10 min, preferably 30 to 800 g/10 min, still more preferably 30 to 500 g/10 min (ISO 1133 at 190 °C under 2.16 kg load), for example 50 to 500 g/10 min. The molecular weight of the LMW component is preferably in the range from 5,000 to 50,000, e.g. 20,000 to 40,000. Preferred molecular weight distribution values for the LMW component are 2 to 50 (GPC), more preferably 5 to 30 (GPC).

The HMW component should have a lower MFR$_2$ and a lower density than the LMW component that is present in the HDPE polymer. The MFR$_2$ and density are such that the final HDPE polymer has the desired preset values. The weight average molecular weight of the HMW component preferably ranges from 150,000 to 400,000, e.g. 200,000 to 350,000.

The weight ratio between the LMW and HMW components (LMW:HMW) in the HDPE polymer of the invention is 10:90 to 90:10, preferably LMW:HMW of 40:60 to 60:40, more preferably 45:55 to 55:45.

The comonomer used in the HMW component (and if present the LMW component) is preferably a C$_{3-12}$ alpha olefin or a mixture of two or more C$_{3-12}$ alpha olefins, e.g. 1-butene, 1-pentene, 1-hexene, 4-methyl-1-pentene, 1-heptene, 1-octene, 1-nonene and 1-decene, with 1-butene and 1-hexene being preferred. 1-butene is especially preferred. The amount of comonomer incorporated in the HMW component is preferably 0.5 to 5 mol-% relative to ethylene, especially 2 to 4 mol-t%.

A preferred HDPE polymer for use in the invention has a total comonomer content of 1 to 8 wt% relative to ethylene, more preferably 1 to 3 mol-%, e.g. up to 2.5 mol-% relative to ethylene (as measured by FTIR).

In one embodiment the HDPE composition comprises only the above defined HDPE polymer. In a further embodiment of the invention the HDPE polymer consists of the LMW and HMW components.

Alternatively, the HDPE composition may comprise other polymer components. Further alternatively also the HDPE polymer may comprise other polymer components, e.g. up to 10 % by weight of a well known polyethylene prepolymer (obtainable from a prepolymerisation step as well known in the art). In case of such prepolymer, one of LMW and HMW components, preferably LMW component, as defined above comprises said prepolymer component. Further, in case the HDPE polymer comprises such prepolymer, the film formed from such a HDPE polymer and having the thickness of 30 $\mu$m has the WVTR values described above.

As to the properties relating to end applications, the tensile properties of the claimed HDPE polymer are also important. Thus, the tensile modulus in the transverse direction of the high density polyethylene polymer of the composition may be at least 900 MPa, preferably at least 1000 MPa, e.g. in the range from 1050 to 1400 MPa, preferably at least 1100 MPa, especially at least 1140 MPa. The sample preparation is described later below under definition methods.

The stress at yield of the HDPE polymer of the composition of the invention in the transverse direction may typically be at least 25 MPa, preferably at least 30 MPa. The sample preparation is described later below under definition methods.

The HDPE polymer of the invention may typically have a tensile strength (TS) of at least 20 MPa. The sample preparation is described later below under definition methods.

Any of the properties as defined above for the HDPE polymer are preferably also met by the HDPE composition of the invention. Thus, the HDPE composition of the invention preferably has a density of at least 940 kg/m$^3$, e.g. at least 945 kg/m$^3$, preferably in the range of from 950 to 980 kg/m$^3$, e.g. 950 to 965 kg/m$^3$. Especially preferably, the density of the high density polyethylene composition of the invention should be at least 955 kg/m$^3$.

Multimodal HDPE polymers for use in the invention may be prepared, for example, by two or more stage polymerisation or by the use of two or more different polymerisation catalysts and/or by the use of different polymerisation conditions in a one stage polymerisation. In principle any polymerisation method including solution, slurry and gas phase polymerisation can be used for producing the high density polyethylene polymer. The temperature in the polymerisation reactor needs to be sufficiently high to reach an acceptable activity of the catalyst. On the other hand, the temperature should not exceed the softening temperature of the polymer. Preferably, however, they are produced in a two or three stage polymerisation. Suitable polymerisation processes include liquid phase polymerisation, e.g. solution or slurry polymerization, preferably in the presence of a diluent (or optionally carried out in bulk), or gas phase polymerisation. Preferably the polymerisation involves at least one slurry polymerisation (e.g. in a loop reactor). In one preferable embodiment one of the above mentioned LMW and HMW components is polymerised as a slurry polymerisation (e.g. in a slurry tank or loop reactor) and the other as a gas phase polymerisation (e.g. in a gas reactor), in any order.

Multimodal HDPE polymers for use in the present invention are preferably produced in such a reactor system. Particularly preferably the multimodal HDPE polymer is formed at least in a two stage process comprising a slurry loop polymerisation followed by a gas phase polymerization. A preferred loop reactor-gas phase reactor system usable in this invention is generally known as BORSTAR® reactor system. The multistage polymerization is preferably carried out using the same Ziegler-Natta catalyst system in each stage. Moreover, the LMW component is preferably polymerised in the slurry reactor, preferably in a loop reactor, and the HMW component in the gas phase reactor in the presence of the reaction product of the slurry reactor.

The conditions used in such processes are well known. For slurry reactors, the reaction temperature will generally be in the range 60 to 110 °C (e.g. 85-110 °C), the reactor pressure will generally be in the range 5 to 80 bar (e.g. 50-65 bar), and the residence time will generally be in the range 0.3 to 5 hours (e.g. 0.5 to 2 hours). The diluent used will generally be an aliphatic hydrocarbon having a boiling point in the range -70 to +100 °C. Preferred diluents include hydrocarbons such as propane or isobutane. Hydrogen is also preferably fed into the reactor to function as a molecular weight regulator.

If gas phase reactions are employed then conditions are preferably as follows:

- the temperature is within the range of 50°C to 130°C, preferably between 60°C and 115 °C,
- the pressure is within the range of 10 bar to 60 bar, preferably between 10 bar to 40 bar,
- hydrogen can be added for controlling the molar mass in a manner known per se,
- the residence time is typically 1 to 8 hours..

The gas used will commonly be a non-reactive gas such as nitrogen or low boiling point hydrocarbons such as propane together with monomer (e.g. ethylene). If desired, the polymerisation may be effected in a known manner under supercritical conditions in the slurry, preferably loop reactor, and/or as a condensed mode in the gas phase reactor.

The gas phase polymerisation may be conducted in a manner known in the art, such as in a bed fluidised by gas feed or in mechanically agitated bed. Also fast fluidisation may be utilised.

Preferably, the lower molecular weight polymer fraction is produced in a continuously operating loop reactor where ethylene is polymerised in the presence of a polymerisation catalyst as stated below and a chain transfer agent such as hydrogen. The diluent is typically an inert aliphatic hydrocarbon, preferably isobutane or propane.

The higher molecular weight component can then be formed in a gas phase reactor, preferably using the same catalyst.

The multistage process wherein the LMW component as defined above is produced in a slurry process and the HMW component is produced in a gas phase reactor in the presence of the LMW component of the previous step, results in a particularly preferable combination. By producing said HMW copolymer component in a gas phase process provides a further contribution to the good barrier properties of the composition of the invention. The high density polyethylenes of the invention are manufactured using well known polymerisation catalysts e.g. as described in numerous earlier patent applications.

A prepolymerisation step may be included in a well known manner before the above described actual polymerisation steps to provide the prepolymer component mentioned above.

The type of catalyst used is not critical. Preferably a coordination catalyst such as a Ziegler Natta catalyst or a single site catalyst (including well known metallocenes and non-metallocenes) is used. Use of a Ziegler Natta catalyst is particularly preferred. Preferred Ziegler-Natta catalysts comprise a transition metal component and an activator. The transition metal component comprises a metal of Group 4 or 5 of the Periodic System (IUPAC) as an active metal. In addition, it may contain other metals or elements, like elements of Groups 2, 13 and 17. Preferably, the transition metal component is a solid. More preferably, it has been supported on a support material, such as inorganic oxide carrier or magnesium halide. Examples of such catalysts are given, among others in WO 95/35323, WO 01/55230, EP 810235 and WO 99/51646. The catalysts disclosed in WO 95/35323 are especially useful as they are well suited in production of both a polyethylene having a high molecular weight and a low molecular weight component. Thus, especially preferably the transition metal component comprises a titanium halide, a magnesium alkoxy alkyl compound and an aluminium alkyl dihalide supported on an inorganic oxide carrier.

In one embodiment a catalyst of Ziegler Natta type, wherein the active components are dispersed and solidified within a Mg-based support by an emulsion/solidification method adapted for polyethylene catalysts, e.g. as disclosed in WO03/106510 of Borealis is used, e.g. according to the principles given in the claims thereof.

In another preferable embodiment, the catalyst is a non-silica supported catalyst, i.e. the active components are not supported on an external silica support. Preferably, the support material of the catalyst is a Mg-based support material. Examples of such preferred Ziegler-Natta catalysts are described in EP 0 810 235.

Multimodal (e.g. bimodal) polymers can also be made by mechanical blending of the polymer components in a known manner.

In a very preferable embodiment of the invention the polyethylene composition is produced using a ZN catalyst disclosed in EP 688794.

Conventional cocatalysts, supports, carriers, electron donors may also be used. Preferably the same catalyst is used throughout the polymerisation.

Where a metallocene catalyst is used, the preparation of the metallocenes can be carried out according or analogously to the methods known from the literature and is within skills of a person skilled in the field. Thus for the preparation see e.g. EP-A-129 368, examples of compounds wherein the metal atom bears a -NR''$_2$ ligand see i.a. in WO-A-9856831 and WO-A-0034341. For the preparation see also e.g. in EP-A-260 130, WO-A-9728170, WO-A-9846616, WO-A-9849208, WO-A-9912981, WO-A-9919335, WO-A-9856831, WO-A-00/34341, EP-A-423 101 and EP-A-537 130.

One preferable preparation method of the polyethylene polymer as defined above is described to WO 00/71615 the content of which is incorporated herein by reference.

The HDPE composition as hereinbefore described is highly suitable for producing mono- or multilayer films, including cast films and blown film extrusion, which extrusion includes coextrusion in case of multilayer films. The films of the present invention may comprise more than one layer and/or have any thickness.

The films comprise the HDPE composition of the invention but can, of course, contain other polymer components. Other polymers may be present in any layer of a film comprising the claimed HDPE. Typical polymers which may be present include LDPE, LLDPE, ethylene-propylene rubber, and other HDPE polymers. Where such polymers are mixed with HDPE to form a layer of a mono or multilayer film, such polymers may comprise up to 25 % wt, e.g. up to 20 % wt of the total polymer content of the layer. More preferably, however, the HDPE polymer of the composition as hereinbefore described is the sole polyolefin present in the HDPE-containing layer (e.g. less than 5 % by weight, more preferably less than 1 % by weight other polyolefin is present). When the HDPE polymer is the sole polymer present, the films which result may be highly homogeneous.

Accordingly, the invention provides a mono- or multilayer film comprising a multimodal HDPE composition, wherein said multimodal HDPE composition comprises a HDPE polymer comprising a lower molecular weight polyethylene component and a higher weight polyethylene component and wherein the HDPE polymer, preferably also the final HDPE composition, has a SHI(2.7/210) of 13 or more, and when said film is formed as a blown film consisting of the HDPE polymer and having a thickness of 30 μm, said film has a WVTR of less than 4.5 g/m$^2$/24 hours according to ASTM F 1249 at 38°C and 90% humidity determined as defined later below.

The blown film of thickness of 30 μm having the above WVTR is prepared as defined in example 2 below. Similarly, the invention provides a mono- or multilayer film comprising a multimodal HDPE composition, wherein said multimodal HDPE composition comprises a HDPE polymer comprising a lower molecular weight polyethylene component and a higher weight polyethylene component and wherein the HDPE polymer, preferably also the final HDPE composition, has a Mw/Mn of at least 10 or more, and when said film is formed as a blown film consisting of the HDPE polymer and having a of thickness of 30 μm, said film has a WVTR of less than 5.0 g/m$^2$/24 hours according to ASTM F 1249 at 38°C and 90% humidity determined as defined later below. The blown film of thickness of 30 μm having the above WVTR is prepared as defined in example 2 below. Preferably, said HDPE polymer of said film has also the SHI as defined above.

The preferable WVTR ranges indicated for the composition, as well as the other properties of the HDPE composition of the invention apply to the film of the invention as well and vice versa.

In one embodiment the HDPE polymer of the invention is used as the sole polymer material of the layer, i.e. the HDPE polymer is not blended with other polymer materials. In another embodiment the layer comprises the HDPE composition of the invention blended with other polymer materials. Such blending is effected typically mechanically. Thus, film layers comprising the HDPE polymer of the invention only as the polymer material and film layers comprising blends of the HDPE polymer of the invention are included within the invention.

Furthermore, in case of the multilayer films, at least one of the layers must comprise the HDPE,composition of the invention

The layer of the film comprising HDPE composition may comprise conventional additives such as antioxidants, heat stabilisers, slip agents, UV stabilisers, colourings, lubricants as well as polymer processing agent. A layer in which the HDPE composition consists essentially of the HDPE polymer of the invention would be one formed from the HDPE polymer as the only polymer component with standard additives as described above.

The films of the present invention may comprise a single layer or may be multilayered (e.g. comprise 2 to 7 layers). Preferred multilayer films comprise 2 to 5 layers, especially 2 or 3 layers. In multilayer films, up to 3 (e.g. 2) layers may comprise the HDPE hereinbefore described.

Other layers which may be present include an oxygen barrier layer, e.g. a PET, polyamide or Al-coated layer as is known in the art. The layers can be combined using conventional lamination techniques. Suitable barrier layers are known and include polyamide, PET and metallised A1 layers.

Conventional water barrier layers may also be present but are preferably absent. Thus in a preferred embodiment the film of the invention does not comprise an additional barrier layer, e.g. a polyamide layer.

The films may be made by any conventional film extrusion procedure known in the art including cast film and blown film extrusion. Thus the film may be produced by extrusion through an annular die and blowing into a tubular film by forming a bubble which is collapsed between nip rollers after solidification. This film can then be slit, cut or converted (e.g. gusseted) as desired. Conventional film production techniques may be used in this regard. If the film is a multilayer film then the various layers are typically coextruded. The skilled man will be aware of suitable extrusion conditions. Generally, however, extrusion is carried out at a temperature in the range 160°C to 240°C, and cooled by blowing gas (generally air) at a temperature of 10 to 50°C to provide a frost line height of 2 to 8 times the diameter of the die. The blow up ratio should generally be in the range 2 to 4, preferably 2.5 to 3.

The resulting films may have any thickness conventional in the art. Typically films may have a thickness of 6 to 200 $\mu$m, preferably 10 to 150 $\mu$m, e.g. 20 to 80 $\mu$m or 15 to 50 $\mu$m.

Preferred films according to the present invention, e.g. films consisting of the HDPE polymer as hereinbefore described, have an Elmendorf tear resistance in the machine direction of at least 0.10 N, especially more than 0.15 N, preferably 0.18 to 0.3 N (for a 30 micron film).

The films of the invention also exhibit low water permeability. Thus for a 30 micron film of the invention (e.g. one consisting of the HDPE polymer), WVTR is preferably less than 4.5 $g/m^2/24$ hours, preferably 0.5 to 3.5 $g/m^2/24$ hours, especially less than 4 $g/m^2/24$hours. Alternatively viewed however, the film will possess a WVTR given by the inequality: WVTR < 135 $[g.\mu m/(24h.m^2]$ / thickness$[\mu m]$, particularly with films of thickness up to 80 $\mu$m, preferably 15 to 50 $\mu$m. Preferably, WVTR is less than 125 $[g.\mu m/(24h.m^2]$ / thickness$[\mu m]$, especially less than 120 $[g.\mu m/(24h.m^2]$ / thickness$[\mu m]$, e.g. less than 115 $[g.\mu m/(24h.m^2]$ / thickness$[\mu m]$.

Still further preferred films have an oxygen permeability of less than 3200 $cm^3/cm^3/24$ hours, more preferably 2000 to 3200 $cm^3/cm^3/24$ hours (for a 30 micron film).

As previously mentioned, the films described herein have surprisingly been found to exhibit remarkable balance between barrier, processing and mechanical properties. The HDPE composition of the invention is particularly suitable to produce self-supporting films.

Self-supporting film means herein mono- or multilayer films, wherein the film is not produced by separately extruding on a substrate, such as paper, to form a coating thereon (known as extrusion coating to obtain an coated article). More preferably the film is a blown monolayer film or a blown multilayer film.

In a further embodiment of the invention the HDPE composition as defined above provides films with a low coefficient of friction (COF) so that it is not necessary to add slip agent.

Moreover, these properties can be achieved using multimodal HDPE polymers with relatively broad molecular weights distributions meaning the processability of the compositions employed to make the films is excellent.

The films of the invention have a wide variety of applications but are of particular interest in packaging of food and especially cereals. Thus viewed from a yet further aspect the invention provides use of the films hereinbefore described in the manufacture of cereal packaging.

The invention will now be described further with reference to the following non-limiting examples.

<u>EXAMPLES</u>

**Analytical Tests**

Density of the materials is measured according to ISO 1183:1987 (E), method D, with isopropanol-water as gradient liquid. The cooling rate of the plaques when crystallising the samples was 15 C/min. Conditioning time was 16 hours.

$MFR_2$ is measured according to ISO 1133 at 190°C at load of 2.16 kg.

**Tensile modulus** (secant modulus, 0.05-1.05%) is measured according to ASTM D 882-A on 30 $\mu$m films. The speed of testing is 5mm/min. The test temperature is 23°C. Width of the film was 25 mm.

**Tensile Stress at yield** is measured according to ISO 527-3. The test temperature is 23°C. Width of the film was 25 mm.

**Tensile Strain at break and tensile strength** are measured according to ISO 527-3. The speed of testing is 500 mm/min. The test temperature is 23°C. Width of the film was 25 mm.

**WVTR** (water vapour transmission rate) was measured according to ASTM F 1249 at 38°C and 90 % relative humidity on a Permantran-W (MoCoN Instruments, Minnesota).

**Dynamic viscosity and Shear thinning index**

Dynamic rheological measurements were carried out with a rheometer, namely Rheometrics RDA-II, on compression moulded samples under nitrogen atmosphere at 190 °C using 25 mm diameter plates and plate and plate geometry with a 1.2 mm gap. The oscillatory shear experiments were done within the linear viscosity range of strain at frequencies from 0.05 to 300 rad/s (ISO 6721-1). Five measurement points per decade are made.

The values of storage modulus (G'), loss modulus (G") complex modulus (G*) and complex viscosity ($\eta$*) were obtained as a function of frequency ($\omega$). $\eta_{100}$ is used as abbreviation for the complex viscosity at the frequency of 100 rad/s. Shear thinning index (SHI), which correlates with MWD and is independent of $M_w$, was calculated according to Heino ("Rheological characterization of polyethylene fractions" Heino, E.L., Lehtinen, A., Tanner J., Seppälä, J., Neste Oy, Porvoo, Finland, Theor. Appl. Rheol., Proc. Int. Congr. Rheol, 11th (1992), 1, 360-362, and "The influence of molecular structure on some rheological properties of polyethylene", Heino, E.L., Borealis Polymers Oy, Porvoo, Finland, Annual Transactions of the Nordic Rheology Society, 1995.)

SHI value is obtained by calculating the complex viscosities $\eta$*(2.7 kPa) and $\eta$*(210 kPa) at a constant value of complex modulus of 2.7 kPa and 210 kPa, respectively. The shear thinning index SHI(2.7/210) is defined as the ratio of the two viscosities $\eta$*(2.7 kPa) and $\eta$*(210 kPa), i.e. $\eta$(2.7)/$\eta$(210).

The definitions and measurement conditions are also described in detail on page 8 line 29 to page 11, line 25 of WO 00/22040.

It is usually not practical to measure the complex viscosity at the value of frequency of 0.05 rad/s directly. The value can be extrapolated by conducting the measurements down to the frequency of 0.126 rad/s, drawing the plot of complex viscosity vs. frequency, drawing a best-fitting line through the five points corresponding to the lowest values of frequency and reading the viscosity value from this line.

**Tear resistance (determined as Elmendorf tear (N))**

The tear strength is measured using the ISO 6383/2 method. The force required to propagate tearing across a film specimen is measured using a pendulum device. The pendulum swings under gravity through an arc, tearing the specimen from pre-cut slit. The specimen is fixed on one side by the pendulum and on the other side by a stationary clamp. The tear strength is the force required to tear the specimen.

**Molecular weights, molecular weight distribution, Mn, Mw, MWD**

Mw/Mn/MWD are measured by GPC according to the following method: The weight average molecular weight Mw and the molecular weight distribution (MWD = Mw/Mn wherein Mn is the number average molecular weight and Mw is the weight average molecular weight) is measured by a method based on ISO 16014-4:2003. A waters 150CV plus instrument was used with column 3 x HT&E styragel from Waters (divinylbenzene) and trichlorobenzene (TCB) as solvent at 140 °C. The column set was calibrated using universal calibration with narrow MWD PS standards (the Mark Howinks constant K: $9.54*10^{-5}$ and a: 0.725 for PS, and K: $3.92*10^{-4}$ and a: 0.725 for PE). Equipment: Alliance 2000 GPCV (W4410), detector: Refractive index and Visc-detector.

EP 1 834 986 A1

**Polydispersity**

The polydispersity index PI is calculated according to the following equation:

$$PI = 10^5 \ Pa/GC \ \ (PI = 100000 Pa/GC)$$

wherein GC in Pa is the cross over modulus at which G'=G"=GC.
The rheology measurements have been made according to ISO 6421-10. Measurements were made at 220°C and 200°C. G' and G" indicate storage modulus and loss modulus, respectively. Measurements were made on a Physica MCR 300 rheometer with a plate-plate fixture, plate diameter 25 mm, and a distance between the plates of 1.8 mm.
**Oxygen permeability** ($cm^3/cm^3/24$ hours) is measured according to ASTM D 3985 on a single layer of film having a thickness of 30 $\mu$m on an Ox-Tran 1000 (MoCoN Instruments, Minnesota).

**Example 1 - Synthesis of multimodal HDPE polymer**

A multimodal HDPE polymer was synthesised analogously to Example 2 of WO 00/71615, except that no prepolymerisation step preceded the actual polymerisation step. Into a loop reactor having a volume of 500 $dm^3$ were continuously introduced propane, ethylene and hydrogen. In addition, a polymerisation catalyst prepared otherwise according to Example 3 of EP 688794 B (the average particle size of the silica carrier was 20 $\mu$m) was introduced into the reactor together with triethyl aluminium so that the molar ratio of aluminium in the activator to titanium in the solid component was 15. The loop reactor was operated at 95 °C temperature and 60 bar pressure. The ratio of hydrogen to ethylene was 372 mol/kmol. The production rate of polymer was about 27 kg/h. The polymer produced in the loop reactor had an $MFR_2$ of 410 g/10 min and a density of about 970 $kg/m^3$.
The slurry was withdrawn from the loop reactor sequentially through outlet valve and directed to a flash where the pressure was reduced to 3 bar. The polymer containing a minor amount of residual hydrocarbons was directed to a fluidised bed gas phase reactor, where also additional ethylene, 1-butene comonomer and hydrogen were added, together with nitrogen as an inert gas to produced the HMW component in the presence of the LMW component. The gas phase reactor was operated at a temperature of 85 °C and a pressure of 20 bar. The hydrogen to ethylene ratio was 70 mol/kmol and the ratio of 1-butene to ethylene was 45 mol/kmol. The production split between the loop and gas phase reactors was 49/51. The total production rate was thus 70 kg/h. The final HDPE polymer obtained had $MFR_2$ of 1.2 g/10 min and density of 956 $kg/m^3$.

**Example 2 - Preparation of Film**

30 $\mu$m films were made on a 3 layer co-extrusion blown film line from Windmoller & Holscher (applies for all above and below WVTR measurements, tear resistance properties and also the other mechanical properties) with a 200 mm die. The die gap was 1.2 mm. All three layers contained the same HDPE polymer of the invention, i.e. the polymer material used in the layers consisted of the same HDPE polymer of the invention. Thus the obtained three layer structure corresponds to a single layer blown film of a thickness of 30 $\mu$m. Said three layer film is produced according the below conditions.
Extrusion conditions:

The blow up ratio (BUR) was 3:1.
The Frost Line Height (FLH): 70 cm above die.
The temperature profile was 200 °C flat.
The output rate was 120 kg/h
Internal bubble cooling (IBC) was applied.
No neck

The polymer and film of examples 1 and 2 was compared to a Commercially available Ziegler Natta unimodal HDPE Grade. Results are presented in Table 1 below.

9

Table 1

| | Unit | Commercial monomodal HDPE | Example 1 |
|---|---|---|---|
| MFR$_2$ | g/10 min | 1,2 | 1.2 |
| Density | kg/m$^3$ | 958 | 956 |
| **TD tensile properties** | | | |
| Tensile modulus, | MPa | 1140 | 1150 |
| Stress at yield | MPa | 29 | 31 |
| Tensile strength | MPa | 26 | 21 |
| Strain at break (Av over a number of tests) | % | 493 | 496 |
| | | | |
| **Values normalised to 30$\mu$m** | | | |
| Elmendorf tear resistance, MD | N | 0,11 | 0,19 |
| Water Vapour Transmission Rate, WVTR | g/m$^2$*24h | 4,6 | 3,3 |
| Oxygen permeability | cm$^3$/m$^2$*24h | 3100 | 2300 |
| | | | |
| **Rheological and GPC data** | | | |
| Mw | | 120000 | 160000 |
| Mn | | 15000 | 11000 |
| | | | |
| MWD | | 8 | 15 |
| | | | |
| G'(5.0 kPa) | | 2600 | 1866 |
| PI | | 1,6 | 1.7 |
| SHI (2.7/210) | | 21 | 18 |
| eta 0,05 | | 12887 | 9460 |

The results in Table 1 show that films according to the present invention comprising multimodal HDPE have a lower WVTR and better mechanical properties than leading commercial HDPE grade at a higher density.

**Example 3 - Preparation of Films**

A further film were prepared according to the process described in Example 2 using a polymer having different MFR$_2$ and density (manufactured according to example 1) as shown in Table 2 below. The properties of the resulting film are also shown in Table 2

Table 2

| Example | 3 |
|---|---|
| MFR2 | 2.8 |
| Density (kg/m$^3$) | 958.4 |
| Mw | 125,000 |
| Mn | 12,000 |
| MWD | 10 |

(continued)

| Example | 3 |
|---|---|
| Tensile modulus (MPa) | 1120 |
| Tensile stress at yield (MPa) | 34 |
| Tear resistance, in transverse direction, TD (N) | 0.19 |
| WVTR (g/m$^2$/24 hours) | 3.1 |
| O$_2$ permeability (cm$^3$/cm$^3$/24 hours) | 2020 |

**Claims**

1.  A multimodal high density polyethylene composition suitable for the production of film, said composition comprising a HDPE polymer which comprises a lower molecular weight polyethylene component and a higher molecular weight polyethylene component and wherein said HDPE polymer has a SHI (2.7/210) of 13 or more and,
    when said multimodal HDPE composition is formed as a blown film consisting of said HDPE polymer and having a thickness of 30 $\mu$m,
    said film has a WVTR of less than 4.5 g/m$^2$/24 hours according to ASTM F 1249 at 38°C and 90% humidity.

2.  A multimodal high density polyethylene composition suitable for the production of film, said composition comprising a HDPE polymer which comprises a lower molecular weight polyethylene component and a higher molecular weight polyethylene component and and wherein said HDPE polymer has a Mw/Mn of at least 10 and,
    when said multimodal HDPE composition is formed as a blown film consisting of said HDPE polymer and having a thickness of 30 $\mu$m,
    said film has a WVTR of less than 5.0 g/m$^2$/24 hours according to ASTM F 1249 at 38°C and 90% humidity.

3.  A multimodal high density polyethylene composition suitable for the production of film, said composition comprising a HDPE polymer which comprises a lower molecular weight polyethylene component and a higher molecular weight polyethylene component and wherein said HDPE polymer has a SHI (2.7/210) of 13 or more and a Mw/Mn of at least 10, and
    when said multimodal HDPE composition is formed as a blown film consisting of said HDPE polymer and having a thickness of 30 $\mu$m,
    said film has a WVTR of less than 5.0 g/m$^2$/24 hours according to ASTM F 1249 at 38°C and 90% humidity.

4.  A composition as claimed in any one of claims 1 to 3 wherein said 30 $\mu$m film is formed using the following extrusion conditions:

    The blow up ratio (BUR) was 3:1.
    The Frost Line Height (FLH): 70 cm above die.
    The temperature profile was 200 °C flat.
    The output rate was 120 kg/h
    Internal bubble cooling (IBC) was applied
    No neck.

5.  A composition as claimed in any preceding claim wherein the LMW component has a density of 0.950-0.980, preferably greater than 0.960 g/cm$^3$.

6.  A composition as claimed in any preceding claim wherein the density of the HDPE polymer is at least 0.940 g/cm$^3$, preferably, 0.950-0.960 cm$^3$.

7.  A composition as claimed in any preceding claim wherein the split by weight between LMW:HMW components is 45:55 to 55:45.

8.  A composition as claimed in any preceding claim wherein the MFR$_2$ of the LMW component is 30 to 500 g/10min.

9.  A composition as claimed in any preceding claim wherein the MFR$_2$ of the HDPE polymer is at least 0.5 g/10min.

**10.** A composition as claimed in any preceding claim wherein said HDPE polymer has an SHI 15 or more.

**11.** A composition as claimed in any preceding claim wherein said HDPE polymer has an SHI 25 or less.

**12.** A composition as claimed in any preceding claim wherein, when said multimodal HDPE composition is formed as a blown film of thickness of 30 $\mu$m by coextruding said multimodal HDPE composition to a three-layer structure, wherein the polymer used in each layer consists of the same multimodal HDPE composition, said film has a WVTR of less than 4.0 g/m$^2$/24 hours according to ASTM F 1249 at 38°C and 90% humidity.

**13.** A composition as claimed in any preceding claim wherein said HDPE polymer has an MWD of 10 to 30.

**14.** A mono- or multilayer film comprising a multimodal HDPE composition, said composition comprising a HDPE polymer which comprises a lower molecular weight polyethylene component and a higher molecular weight polyethylene component and wherein said HDPE polymer has a SHI (2.7/210) of 13 or more and, when said multimodal HDPE composition is formed as a blown film consisting of said HDPE polymer and having a thickness of 30 $\mu$m, said film has a WVTR of less than 4.5 g/m$^2$/24 hours according to ASTM F 1249 at 38°C and 90% humidity.

**15.** A mono- or multilayer film comprising a multimodal HDPE composition, said composition comprising a HDPE polymer which comprises a lower molecular weight polyethylene component and a higher molecular weight polyethylene component and and wherein said HDPE polymer has a Mw/Mn of at least 10 and, when said multimodal HDPE composition is formed as a blown film consisting of said HDPE polymer and having a thickness of 30 $\mu$m, said film has a WVTR of less than 5.0 g/m$^2$/24 hours according to ASTM F 1249 at 38°C and 90% humidity.

**16.** A mono or multilayer film as defined in claim 15, wherein said HDPE polymer has a SHI(2.7/210) as defined in claim 14.

**17.** A mono or multilayer film as defined in claim 14, wherein said HDPE polymer has a Mw/Mn as defined in claim 15

**18.** A mono or multilayer film as defined in any of the preceding claims 14 to 17, wherein said HDPE composition is as defined in any of the preceding claims 3-13.

**19.** The film according to claim 14 to 18 which is a blown monolayer film or a blown coextruded multilayer film.

**20.** Use of a film as defined in any of claims 14 to 19 in the manufacture of food packaging preferably a cereal packaging.

**21.** A HDPE polymer which comprises a lower molecular weight polyethylene component and a higher molecular weight polyethylene component and wherein said HDPE polymer has:

an SHI (2.7/210) of 13 or more and,
when said HDPE polymer is formed as a blown film having a thickness of 30 $\mu$m,
said film has a WVTR of less than 4.5 g/m$^2$/24 hours according to ASTM F 1249 at 38°C and 90% humidity;
or
a Mw/Mn of at least 10 and,
when said HDPE polymer is formed as a blown film having a thickness of 30 $\mu$m,
said film has a WVTR of less than 5.0 g/m$^2$/24 hours according to ASTM F 1249 at 38°C and 90% humidity.

European Patent Office

**EUROPEAN SEARCH REPORT**

Application Number

EP 06 25 1311

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,X | WO 00/71615 A (BOREALIS TECHNOLOGY OY; COCKBAIN, JULIAN; LINDAHL, ANN, DRISTIN; AUGES) 30 November 2000 (2000-11-30)<br>* the whole document *<br>* examples * | 1-21 | INV.<br>C08L23/04<br>B32B27/32<br>C08J5/18 |
| Y | US 2005/137342 A1 (KRISHNASWAMY RAJENDRA K ET AL) 23 June 2005 (2005-06-23)<br>* the whole document * | 1-21 | |
| Y | WO 2004/101674 A (DOW GLOBAL TECHNOLOGIES INC; MICHIE, WILLIAM, J., JR; NEUBAUER, ANTHON) 25 November 2004 (2004-11-25)<br>* the whole document * | 1-21 | |

TECHNICAL FIELDS SEARCHED (IPC)

C08L
B32B
C08J
C09D

The present search report has been drawn up for all claims

| Place of search | Date of completion of the search | Examiner |
|---|---|---|
| The Hague | 17 August 2006 | Droghetti, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 25 1311

This annex lists the patent family members relating to the patent documents cited in the above-mentioned European search report.
The members are as contained in the European Patent Office EDP file on
The European Patent Office is in no way liable for these particulars which are merely given for the purpose of information.

17-08-2006

| Patent document cited in search report | | Publication date | Patent family member(s) | | Publication date |
|---|---|---|---|---|---|
| WO 0071615 | A | 30-11-2000 | AT | 238387 T | 15-05-2003 |
| | | | AU | 5085700 A | 12-12-2000 |
| | | | CN | 1122686 C | 01-10-2003 |
| | | | DE | 60002322 D1 | 28-05-2003 |
| | | | DE | 60002322 T2 | 08-04-2004 |
| | | | EP | 1187876 A1 | 20-03-2002 |
| | | | ES | 2198314 T3 | 01-02-2004 |
| US 2005137342 | A1 | 23-06-2005 | NONE | | |
| WO 2004101674 | A | 25-11-2004 | AU | 2004239250 A1 | 25-11-2004 |
| | | | BR | PI0411162 A | 11-07-2006 |
| | | | CA | 2523950 A1 | 25-11-2004 |
| | | | CN | 1788048 A | 14-06-2006 |
| | | | EP | 1627015 A1 | 22-02-2006 |
| | | | MX | PA05012157 A | 08-02-2006 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 9618678 A
- WO 9535323 A
- WO 0155230 A
- EP 810235 A
- WO 9951646 A
- WO 03106510 A, Borealis
- EP 0810235 A
- EP 688794 A
- EP 129368 A
- WO 9856831 A
- WO 0034341 A
- EP 260130 A
- WO 9728170 A
- WO 9846616 A
- WO 9849208 A
- WO 9912981 A
- WO 9919335 A
- EP 423101 A
- EP 537130 A
- WO 0071615 A
- WO 0022040 A
- EP 688794 B

### Non-patent literature cited in the description

- **HEINO, E.L. ; LEHTINEN, A. ; TANNER J. ; SEPPÄLÄ, J.** Rheological characterization of polyethylene fractions. *Theor. Appl. Rheol., Proc. Int. Congr. Rheol,* 1992, vol. 1, 360-362
- **HEINO, E.L.** The influence of molecular structure on some rheological properties of polyethylene. *Annual Transactions of the Nordic Rheology Society,* 1995